(19) Europäisches Patentamt

European Patent Office

Office européen des brevets

(11) **EP 3 331 153 B1**

(12) **EUROPEAN PATENT SPECIFICATION**

(45) Date of publication and mention
of the grant of the patent:
**23.09.2020 Bulletin 2020/39**

(51) Int Cl.:
***H02P 21/00*** *(2016.01)*

(21) Application number: **16201659.6**

(22) Date of filing: **01.12.2016**

(54) **METHOD OF AND SYSTEM FOR CONTROLLING A PERMANENT MAGNET MOTOR**

VERFAHREN UND SYSTEM ZUR STEUERUNG EINES PERMANENTMAGNETMOTORS

PROCÉDÉ ET SYSTÈME DE COMMANDE D'UN MOTEUR À AIMANT PERMANENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.06.2018 Bulletin 2018/23**

(73) Proprietor: **Vestel Elektronik Sanayi ve Ticaret A.S.
45030 Manisa (TR)**

(72) Inventors:
• **GÖKALAN, Rasit**
**45030 Manisa (TR)**
• **KIZILARI, Hüseyin Cem**
**45030 Manisa (TR)**
• **KARATAS, Mustafa**
**45030 Manisa (TR)**
• **AYRAN, Caglar**
**45030 Manisa (TR)**

(74) Representative: **Ascherl, Andreas et al
KEHL, ASCHERL, LIEBHOFF & ETTMAYR
Patentanwälte - Partnerschaft
Emil-Riedel-Strasse 18
80538 München (DE)**

(56) References cited:
**FR-A1- 3 012 270      US-A1- 2007 064 359
US-A1- 2009 224 707      US-A1- 2015 171 778**

• **TAE-SUK KWON ET AL: "Novel anti-windup of a
current regulator of a surface-mounted
permanent-magnet motor for flux-weakening
control", CONFERENCE RECORD OF THE 2005
IEEE INDUSTRY APPLICATIONS CONFERENCE
FORTIETH IAS ANNUAL MEETING 2-6 OCT. 2005
KOWLOON, HONG KONG, CHINA, IEEE,
CONFERENCE RECORD OF THE 2005 IEEE
INDUSTRY APPLICATIONS CONFERENCE
FORTIETH IAS ANNUAL MEETING (IEEE CAT.,
vol. 3, 2 October 2005 (2005-10-02), pages
1813-1819, XP010842640, DOI:
10.1109/IAS.2005.1518692 ISBN:
978-0-7803-9208-3**

## Description

The present invention relates to a method of controlling a permanent magnet motor according to claim 1, a closed-loop control system for controlling the speed of a permanent magnet motor according to claim 14, and a computer program product or program code or system for controlling a permanent magnet motor according to claim 15.

## Background of the Invention

With the development of new magnetic materials, the use of permanent magnet motors has become increasingly widespread. Such permanent magnet motors are now used in a wide variety of applications, including, for example, to drive compressors. It is known to control the speed of a permanent magnet motor using at least two proportional-integral (PI) controllers. One of these PI controllers is a motor speed PI controller, which can be connected to the outside of a closed-loop control system for the motor. The other of the PI controllers is a motor current PI controller, which can be connected to the output of the speed PI controller. In some cases, however, the motor's reference speed for a particular application may not be reached in closed-loop speed control, because of a lower inverter DC bus voltage or a higher load torque, for example. This situation will cause a steady error in the speed PI controller, and after some period of time, the steady error in the speed PI controller will in turn cause a maximum reference q-axis stator current at the output of the speed PI controller. If this maximum reference current is applied to the current PI controller because of the steady error in the speed PI controller when a load on the motor requires a lower q-axis current, then there will also be a steady error in the current PI controller. This saturates the current PI controller and generates a maximum reference q-axis voltage at the output of the current PI controller.

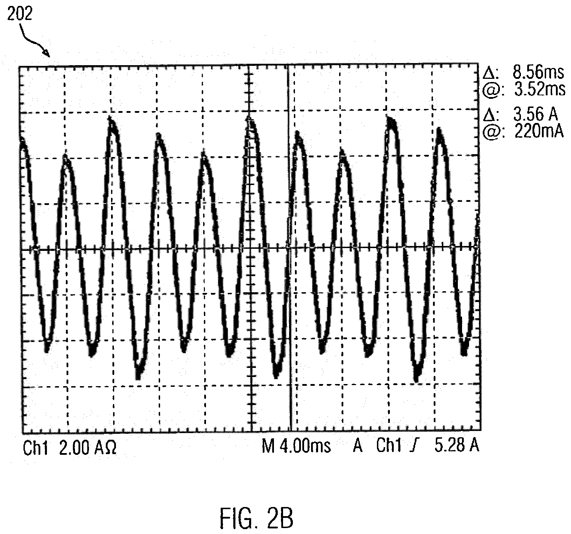

Such steady errors in the speed and current PI controllers when the reference speed of the motor is not reached can cause periodical variations in the amplitude of the motor phase current waveform, one example of which is shown in Fig. 2B. This disturbance in the motor phase current waveform causes torque ripple, which can lead to undesirable vibration and noise. The number of variations in the amplitude of the phase current waveform in a cycle of such variations over time is directly related to the number of motor pole pairs. The difference in the size of the amplitude variations in the phase current waveform is related to the mechanical design of the motor. For some motors with good mechanical design, this current amplitude difference may not arise as shown in Fig. 2B, even if a steady error exists in the speed and current PI controllers, if the motor's reference speed for a particular application has not been reached.

In vectored closed-loop speed control of permanent magnet motors, if a motor's reference speed for a particular application is not reached because, for example, of a lower inverter DC bus voltage or a higher load torque, it is known to apply flux weakening to the motor to increase the motor's speed. This flux weakening is usually achieved by increasing the value of the d-axis stator current. However, if only this flux weakening is applied without adopting any other measures, a problem with possible variations in the amplitude of the motor phase current waveform can still arise, as described above. For example, US 2014/0055065 A describes a technique for increasing the speed of a motor by applying flux weakening, but this technique may not always work as intended under a higher load torque or in the case that the closed-loop speed control is sensorless control, wherein the actual speed of the motor is estimated, rather than being sensed directly. US 2012/0293101 A describes an improved technique for such sensorless control. US 2009/224707 A describes a control system for an electric motor arranged to determine the position of the motor from at least one electrical parameter by means of a position determining algorithm. The control system described therein is arranged to monitor at least one algorithm parameter defined by the algorithm and if the monitored parameter meets a predetermined fault condition, to generate a fault indication.

The present invention seeks to address this problem with undesirable periodic variations in the amplitude of the motor phase current waveform caused by steady errors in the speed and current PI controllers.

## Object of the Invention

It is therefore an object of the invention to provide a method of controlling a permanent magnet motor, a closed-loop control system for controlling the speed of a permanent magnet motor, and a computer program product or program code or system for controlling a permanent magnet motor.

## Description of the Invention

The object of the invention is solved by a method of controlling a permanent magnet motor according to claim 1. Preferably, the method at least comprises applying closed-loop control to the speed of the motor to match a reference speed by comparing a measured q-axis stator current of the motor to a reference q-axis stator current of the motor and deriving a difference therebetween. This difference represents the current error. The method further comprises checking whether this difference is greater than a threshold value at which a phase current amplitude of the motor starts to vary according to the number of poles of the motor. If the difference between the measured and reference q-axis stator currents is not greater than this threshold value, the method further comprises setting the reference speed of the motor equal to an application reference speed and returning to closed-loop control of the speed of the motor. If, on the other hand, the difference between the measured and reference q-axis stator currents is greater than the threshold value, the method instead further comprises setting the reference speed of the motor equal to a temporary reference speed and checking whether the temporary reference speed is less than the application reference speed. If the temporary reference speed is not less than the application reference speed, the method further comprises setting the reference speed equal to the application reference speed and returning to closed-loop control of the speed of the motor. If, on the other hand, the temporary reference speed is less than the application reference speed, the method instead further comprises changing a phase offset angle (theta) between stator and rotor magnetic fields of the motor before returning to closed-loop control of the speed of the motor.

Thus, with such a method, periodical variations in the amplitude of the motor phase current waveform can be avoided by changing the phase offset angle between stator and rotor magnetic fields of the motor when the reference speed of the motor is set to a temporary reference speed that is less than the motor's application reference speed. In this way, a maximum reference q-axis stator current at the output of the speed PI controller can be avoided and saturation of the current PI controller for the motor can be prevented.

The phase offset angle between the stator and rotor magnetic fields of the motor may be either increased or decreased in order to achieve flux weakening and thereby increase the actual speed of the motor.

In general, a permanent magnet motor provides maximum torque when the phase angle between the stator and rotor magnetic fields is equal to 90 (electrical) degrees. However, this angle of maximum torque can vary according to motor design, as well as according to other parameters like load torque and motor speed. In addition, if sensorless speed control is applied to such a permanent magnet motor, there will be a time delay between the actual value of theta and the estimated value of theta. Increasing the actual speed of the motor by changing the phase offset angle theta has the advantage of accommodating this time delay, and also helps the optimum rotor angle to be achieved.

Preferably, the method comprises repeatedly checking at regular intervals in time whether the difference between the measured q-axis stator current of the motor and the reference q-axis stator current of the motor is greater than the threshold value at which the phase current amplitude of the motor starts to vary, and also performing the subsequent parts of the method described above according to the result each time the check is performed.

Preferably, the temporary reference speed is also adjusted to approach the motor's application reference speed each time the method is performed. Thus the temporary reference speed can be adjusted to match the application reference speed without introducing periodical variations into the amplitude of the motor phase current waveform by changing the phase offset angle between the stator and rotor magnetic fields of the motor each time that the temporary reference speed is adjusted.

If so, a value of the temporary reference speed is preferably initially set equal to a measured or estimated actual speed of the motor, and the value of the temporary reference speed is then adjusted by an amount which is proportional to a difference between the threshold value on the one hand, and on the other, the difference between the measured and reference q-axis stator currents of the motor. In this way, the actual speed of the motor may be approached to match the reference speed smoothly and continuously, whilst keeping the current error, as represented by the difference between the measured and reference q-axis stator currents, close to the threshold value at which periodical variations in the amplitude of the motor phase current waveform start to appear.

The constant of proportionality between (a) the amount by which the value of the temporary reference speed is adjusted, and (b) the difference between on the one hand, the threshold value and on the other hand, the difference between the measured and reference q-axis stator currents of the motor, may be empirically determined according to motor design, load and other variable parameters.

The value of the temporary reference speed may be adjusted either up or down, that is to say, the temporary reference speed may be either increased or decreased.

Advantageous embodiments of the invention may be configured according to any claim and/or part of the following description.

The measured or estimated actual speed of the motor is preferably the speed of the motor derived from using sliding mode observer rotor position (SMOPOS) estimation of the position of the motor. This has the advantage of allowing for sensorless control of the motor.

Preferably, the measured q-axis stator current of the motor is compared to the reference q-axis stator current of the motor in the frequency domain. This has the advantage that because an undistorted sine wave in the time domain corresponds to a unit impulse (or Dirac delta) function in the frequency domain, a phase current waveform which is a distorted sine wave in the time domain will exhibit harmonics at higher frequencies, which can be more readily detected in the frequency domain. The present invention is not restricted, however, to situations in which the undistorted phase current waveform is a sine wave, and is equally well applicable to other situations, such as that in which the undistorted phase current waveform is a square wave, although a similar process of frequency domain analysis may also be carried out in such a case.

Preferably, at least one of the measured q-axis stator current of the motor and the reference q-axis stator current of the motor are filtered to respectively derive a filtered measured q-axis stator current of the motor and a filtered reference q-axis stator current of the motor. This has the advantage that the filtered versions of the measured and reference q-axis stator currents may be more readily analysed for distortion than the unfiltered versions of the measured and reference q-axis stator currents.

If such filtering is applied, at least one of the filtered measured q-axis stator current and the filtered reference q-axis stator current is preferably derived using a band-pass filter or a high-pass filter in the frequency domain. This has the advantage of being able to separate out harmonics representing different distortions of the phase current waveform. Thus the amount of different types of distortion may be measured and analysed, rather than giving just a one-dimensional measurement of distortion, for better control.

In one preferred embodiment, the phase offset angle (theta) between the stator and rotor magnetic fields of the motor may be changed continuously over a predetermined period of time.

In an alternative preferred embodiment, the phase offset angle (theta) between the stator and rotor magnetic fields of the motor may be changed in two or more successive steps. This has the advantage of allowing for adaptive flux weakening, in other words for the actual speed of the motor to be approached to match the reference speed of the motor according to the difference between the actual speed and the reference speed.

In such a case, the size of each step is preferably proportional to a difference between the temporary reference speed and the application reference speed. This has the advantage of increasing the efficiency at which the reference speed of the motor may be adjusted to match the application reference speed.

In one possible preferred embodiment, the steps to change the phase offset angle (theta) may be made at predetermined intervals in time.

In an alternative possible preferred embodiment, the steps to change the phase offset angle (theta) may instead be made at intervals in time proportional to the difference between the temporary reference speed and the application reference speed.

Preferably, the permanent magnet motor is one of a brushless direct-current (BLDC) motor and a permanent magnet synchronous motor (PMSM).

The present invention also relates to a closed-loop control system for controlling the speed of a permanent magnet motor according to claim 14.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the systems and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

## Brief Description of the Drawings

Fig. 1 is a schematic block diagram of a closed-loop control system for a permanent magnet motor;

Fig. 2A shows an example of a first oscilloscope read-out;

Fig. 2B shows an example of a second oscilloscope read-out; and

Fig. 3 is a flow diagram, schematically representing an embodiment of a method of controlling a permanent magnet motor.

## Detailed Description

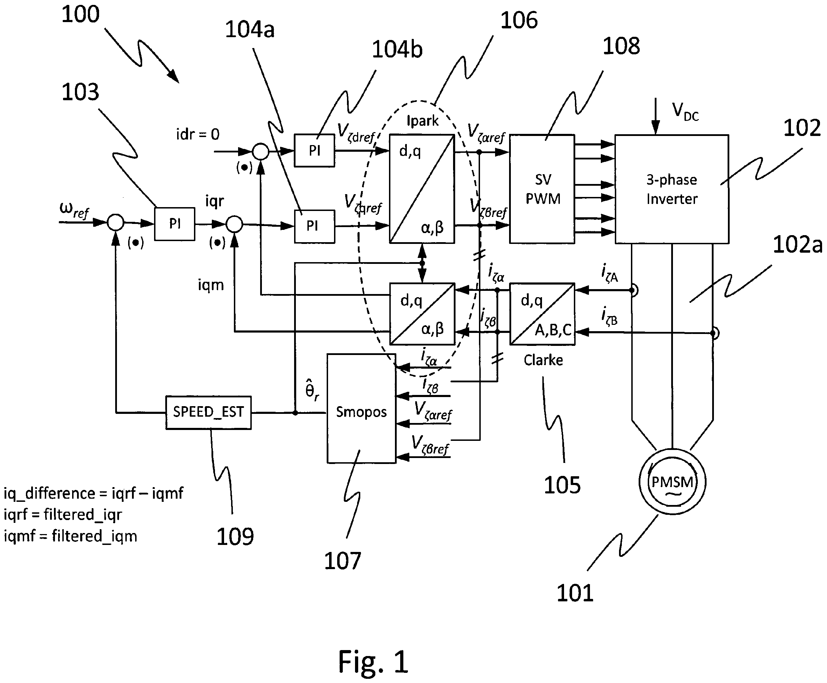

Fig. 1 schematically shows a block diagram of a space vector closed-loop control system 100 suitable for controlling a permanent magnet motor, such as a brushless direct-current (BLDC) motor or a permanent magnet synchronous motor (PMSM). The control system 100 at least comprises a permanent magnet synchronous motor (PMSM) 101, a DC inverter 102 which provides power to the motor 101 via a DC bus 102a, a speed PI controller 103, a q-axis current PI controller 104a and a d-axis current PI controller 104b, a Clarke (alpha-beta) transformation module 105, a pair of Park (direct quadrature or d-q) transformation modules 106, a sliding mode observer rotor position (SMOPOS) estimation module 107, a space vector pulse width modulation (PWM) module 108 and a motor speed estimation module (SPEED_EST) 109. The Clarke transformation module 105, the Park transformation modules 106, the rotor position estimation module 107, the current PI controllers 104a, 104b and the space vector PWM module 108 form a closed-loop control circuit for the motor 101, which draws power from the DC inverter 102 via the DC bus 102a. The speed PI controller 103 is connected to the outside of this closed-loop control circuit. The speed estimation module 109 derives an estimated speed of rotation of the motor from the rotor position estimation module 107 and feeds this estimated speed to the speed PI controller 103. The speed PI controller 103 uses this estimated speed and an input motor reference speed $\omega_{ref}$ for a particular application of the motor to output a reference q-axis stator current for input to the q-axis current PI controller 104a in the closed-loop control circuit. Operation of the closed-loop control system 100 for controlling the speed of the permanent magnet motor 101 will be described in greater detail below.

The following parameters, some of which are visible in Fig. 1, will now be defined for the subsequent description:

| | |
|---|---|
| Iqr | Reference q-axis stator current |
| Iqm | Measured q-axis stator current |
| Iqrf | Reference filtered q-axis stator current |
| Iqmf | Measured filtered q-axis stator current |
| Iq_difference | Difference between Iqrf and Iqmf, that is, |

$$\text{Iq\_difference} = \text{Iqrf} - \text{Iqmf} \qquad \text{[Eqn. 1]}$$

| | |
|---|---|
| IqErrorThreshold | Threshold value of Iq_difference at which phase current amplitude waveform starts to change according to number of motor poles |
| TemporarySpeedRef | Reference value of speed PI controller 103 when the value of Iq_difference is greater than the value of IqErrorThreshold, that is, if: |

$$\text{Iq\_difference} > \text{IqErrorThreshold} \qquad \text{[Eqn. 2]}$$

| | |
|---|---|
| deltaRefSpeed | Delta speed value to add to or subtract from TemporarySpeedRef to keep the value of Iq_difference close to the value of IqErrorThreshold |

In closed-loop speed control of the motor 101, the value of Iq_difference is checked at predetermined regular intervals to see whether it is greater than the value of IqErrorThreshold. If the value of Iq_difference is greater than the value of IqErrorThreshold, this means that there are steady errors in the speed and current PI controllers 103, 104a, and that a problem with variation in the amplitude of the phase current will start to be seen, as in Fig. 2B. At this time, the value of TemporarySpeedRef starts to be used as a speed reference value for the speed PI controller 103, instead of the application speed reference value which is normally used. The initial value of TemporarySpeedRef is set equal to the actual speed of the motor 101, which in the embodiment of Fig. 1 is an estimated speed, but which may instead be a measured speed. Thereafter, by adding or subtracting some delta speed value deltaRefSpeed to TemporarySpeed-Ref, the value of Iq_difference can be kept at the threshold value of IqErrorThreshold at which the problem with phase current amplitude variations starts to occur. The values of deltaRefSpeed and TemporarySpeedRef used to set the reference speed for the speed PI controller 103 are calculated using the following two equations:

$$\text{deltaRefSpeed} = \text{Kp} \times ( \text{IqErrorThreshold} - \text{Iq\_difference} ) \qquad \text{[Eqn. 3]}$$

where Kp is a constant of proportionality which can be empirically determined, and

$$\text{TemporarySpeedRef}_{n+1} = \text{TemporarySpeedRef}_n + \text{deltaRefSpeed} \qquad \text{[Eqn. 4]}$$

where the subscripts n, n+1 represent successive iterations of the calculation.

According to Equations 3 and 4, if Iq_difference is greater than IqErrorThreshold, the value of deltaRefSpeed becomes negative and the value of TemporarySpeedRef is decreased at the speed PI controller 103. Decreasing the reference speed also decreases the q-axis current reference value and will therefore also decrease the value of Iq_difference. On the other hand, if the value of Iq_difference is less than the value of IqErrorThreshold, then the value of TemporarySpeedRef is increased. This increases the q-axis current reference value and will therefore also increase the value of Iq_difference. By applying this control method, the value of Iq_difference can be kept constant.

Thus, the value of Iq_difference can be kept at or near the threshold value IqErrorThreshold, so that the current amplitude variation problem shown in Fig. 2B is not seen and the speed of the motor can be increased up to the application speed reference value by changing the angle (theta) between the stator and rotor magnetic fields over a period of time.

For example, suppose that the reference speed value for a particular application is 5000 rpm (revolutions per minute) and that the motor's actual speed (measured or estimated) is 4000 rpm, but that because of a lower DC bus voltage or a higher torque load, the actual speed cannot be increased up to the application reference speed of 5000 rpm. Suppose that the value of Iq_difference is higher than the value of IqErrorThreshold at the measured speed of 4000 rpm. In other words, a phase current amplitude variation problem starts to be seen at the measured speed of 4000 rpm. At this time, the TemporarySpeedRef is therefore set equal to the motor's actual speed of 4000 rpm. The value of deltaRefSpeed is added to or subtracted from TemporarySpeedRef at predetermined regular intervals, in order to keep the value of Iq_difference at or close to the level of IqErrorThreshold. Meanwhile, the actual speed can be increased to the application reference level of 5000 rpm by changing the phase angle (theta) between the stator and rotor magnetic fields, that is to say, by flux-weakening.

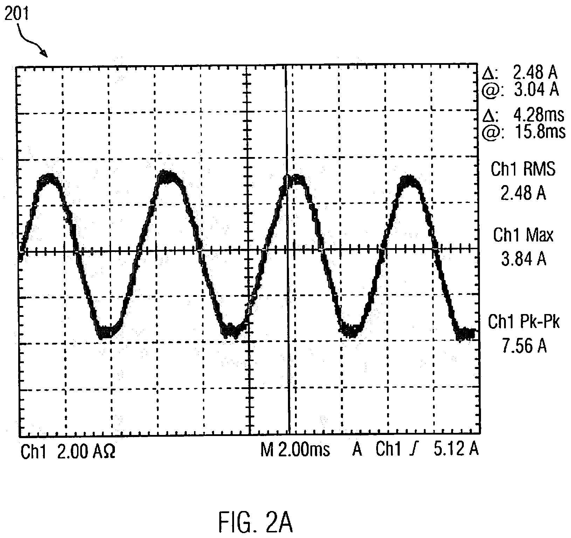

Fig. 2A shows an example of an oscilloscope read-out 201, plotting current on the vertical axis or ordinate against time on the horizontal axis or abscissa, of the phase current waveform of a permanent magnet motor if the measured speed of the motor is equal to the reference speed for a particular application. In this case, it can be seen that the waveform is of constant amplitude, and there is no need for flux weakening. In contrast and for comparison with Fig. 2A, Fig. 2B shows an example of an oscilloscope read-out 202, also plotting current on the vertical axis or ordinate against time on the horizontal axis or abscissa, of the phase current waveform of the same permanent magnet motor if the measured speed of the motor is less than the reference speed for the particular application and if the value of Iq_difference (that is, the current error) is greater than the value of IqErrorThreshold. In this case, it can be seen that the phase current waveform exhibits variations in amplitude, causing torque ripple, which can lead to motor vibration and noise. In the example shown in Fig. 2B, there are three different amplitudes of the phase current waveform over time, before the phase current waveform repeats the same cycle of amplitude variations, reflecting the fact that the motor has three pairs of poles. A different motor with a different number of pairs of poles would instead have a correspondingly different number of variations in the amplitude of the phase current waveform over time before repeating the same cycle of amplitude variations. On the other hand, the size of the variations in amplitude is related to the mechanical design of the motor.

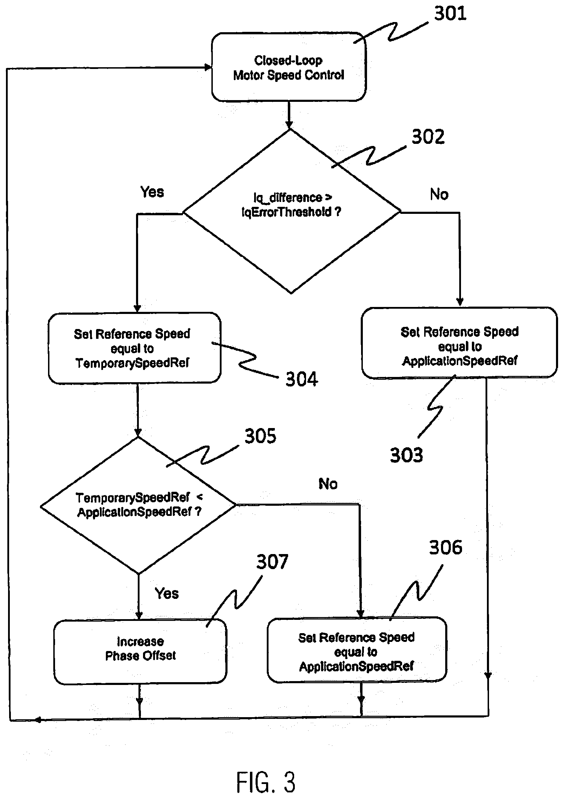

Fig. 3 is a flow diagram, schematically representing an embodiment of a method of controlling a permanent magnet motor, such as a brushless direct-current (BLDC) motor or a permanent magnet synchronous motor (PMSM). The motor may be used in a compressor, for example. The method at least comprises the following operations. Firstly, the method applies 301 closed-loop speed control to the motor in a manner as explained above in relation to Fig. 1. At predetermined regular intervals in time, the method checks 302 whether the value of Iq_difference is greater than the value of IqErrorThreshold. If the value of Iq_difference is not greater than the value of IqErrorThreshold, the reference speed for the speed PI controller 103 of the motor is set 303 equal to an application reference speed for the particular application of that motor, ApplicationSpeedRef, and the method returns to closed-loop speed control of the motor 301 until the next time it checks 302 whether the value of Iq_difference is greater than the value of IqErrorThreshold. If, on the other hand, the value of Iq_difference is greater than the value of IqErrorThreshold, the reference speed for the speed PI controller 103 of the motor is set 304 equal to a temporary reference speed, TemporarySpeedRef, and the method checks 305 whether the TemporarySpeedRef is less than the ApplicationSpeedRef. If the TemporarySpeedRef is not less than the ApplicationSpeedRef, the reference speed for the speed PI controller 103 of the motor is set 306 equal to ApplicationSpeedRef and the method returns to closed-loop speed control 301 of the motor until the next time it checks 302 whether the value of Iq_difference is greater than the value of IqErrorThreshold. If, on the other hand, the TemporarySpeedRef is less than the ApplicationSpeedRef, the phase offset of the motor is changed 307 (increased or decreased) to alter the speed of the motor by flux weakening and the method returns to closed-loop speed control 301 of the motor until the next time it checks 302 whether the value of Iq_difference is greater than the value of IqError-Threshold.

In summary, therefore, the present invention provides a method of controlling a permanent magnet motor. The permanent magnet motor may be a brushless direct-current (BLDC) motor or a permanent magnet synchronous motor (PMSM). The method comprises applying closed-loop control to the speed of the motor to match it to a reference speed ($\omega_{ref}$) by comparing a measured q-axis stator current of the motor with a reference q-axis stator current of the motor and deriving a difference therebetween. This difference represents the current error. The current error is compared to a threshold value at which a phase current amplitude of the motor starts to exhibit distortions. If the current error is not greater than this threshold value, the reference speed ($\omega_{ref}$) of the motor is set equal to an application reference speed of the motor for its particular application and the closed-loop control is continued. If, on the other hand, the current error is greater than the threshold value, the reference speed ($\omega_{ref}$) is set equal to a temporary reference speed, which is then compared to the application reference speed. If the temporary reference speed is not less than the application reference speed, the reference speed ($\omega_{ref}$) is set equal to the application reference speed and the closed-loop control is continued. If, on the other hand, the temporary reference speed is less than the application reference speed, a phase offset angle (theta) between stator and rotor magnetic fields of the motor is changed, in order to adjust the actual speed of the motor by flux weakening, before the closed-loop control is continued. In this way, the actual speed of the motor may be made to approach the reference speed ($\omega_{ref}$) without inducing periodical variations in the amplitude of the motor phase current waveform. The invention also provides a system for performing such a method and a computer program product or program code for executing such a method.

**Reference Numerals:**

| | | | | |
|---|---|---|---|---|
| 100 | Motor closed-loop control system | | 201 | First oscilloscope read-out |
| 101 | Permanent magnet synchronous motor (PMSM) | | 202 | Second oscilloscope read-out |
| | | | 301 | Closed loop motor speed control |
| 102 | DC inverter | | 302 | Is Iq_difference greater than IqErrorThreshold? |
| 103 | Motor speed PI controller | | | |
| 104a | Motor current PI controller (q-axis) | | 303 | Set reference speed equal to ApplicationSpeedRef |
| 104b | Motor current PI controller (d-axis) | | | |
| 105 | Clarke (alpha-beta) transformation module | | 304 | Set reference speed equal to TemporarySpeedRef |
| 106 | Park (direct quadrature or d-q) transformation modules | | 305 | Is TemporarySpeedRef less than ApplicationSpeedRef? |
| 107 | Sliding mode observer rotor position (SMOPOS) estimation module | | 306 | Set reference speed equal to ApplicationSpeedRef |
| | | | 307 | Increase phase offset |
| 108 | Space vector pulse width modulation module | | | |

**Claims**

1. A method of controlling a permanent magnet motor (101), the method at least comprising:

    applying (301) closed-loop control to the speed of the motor to match a reference speed ($\omega_{ref}$) by comparing a measured q-axis stator current (Iqm) of the motor to a reference q-axis stator current (Iqr) of the motor and deriving a difference (Iq_difference) therebetween;
    checking (302) whether the difference (Iq_difference) between the measured and reference q-axis stator currents of the motor is greater than a threshold value (IqErrorThreshold) at which a phase current amplitude of the motor starts to vary according to the number of poles of the motor;
    **characterized by**:

        if not, setting (303) the reference speed ($\omega_{ref}$) of the motor equal to an application reference speed (ApplicationSpeedRef) and returning to closed-loop control of the speed of the motor;
        if so, setting (304) the reference speed ($\omega_{ref}$) of the motor equal to a temporary reference speed (TemporarySpeedRef) and checking (305) whether the temporary reference speed (TemporarySpeedRef) is less than the application reference speed (ApplicationSpeed Ref);
        if not, setting (306) the reference speed ($\omega_{ref}$) equal to the application reference speed (ApplicationSpeedRef) and returning to closed-loop control of the speed of the motor;
        if so, changing (307) a phase offset angle (theta) between stator and rotor magnetic fields of the motor before returning to closed-loop control of the speed of the motor.

2. A method according to claim 1, further comprising:
    adjusting the temporary reference speed (TemporarySpeedRef) to approach the application reference speed (ApplicationSpeedRef).

3. A method according to claim 2, further comprising:

   initially setting a value of the temporary reference speed (TemporarySpeedRef) equal to a measured or estimated actual speed of the motor; and
   adjusting the value of the temporary reference speed (TemporarySpeedRef) by an amount (deltaRefSpeed) proportional to a difference between said threshold value (IqErrorThreshold) and said difference (Iq_difference) between the measured and reference q-axis stator currents of the motor.

4. A method according to claim 3, wherein the measured or estimated actual speed of the motor is the speed of the motor derived (109) from using sliding mode observer rotor position (SMOPOS) estimation (107) of the position of the motor.

5. A method according to any one of the preceding claims, wherein the measured q-axis stator current (Iqm) of the motor is compared to the reference q-axis stator current (Iqr) of the motor in the frequency domain.

6. A method according to any one of the preceding claims, further comprising filtering at least one of the measured q-axis stator current (Iqm) of the motor and the reference q-axis stator current (Iqr) of the motor to respectively derive a filtered measured q-axis stator current (Iqmf) of the motor and a filtered reference q-axis stator current (Iqrf) of the motor.

7. A method according to claim 6 as dependent on claim 5, wherein the at least one of the filtered measured q-axis stator current (Iqmf) of the motor and the filtered reference q-axis stator current (Iqrf) of the motor is derived using a band-pass filter or a high-pass filter in the frequency domain.

8. A method according to any one of the preceding claims, wherein the phase offset angle (theta) between the stator and rotor magnetic fields of the motor is changed (307) continuously over a predetermined period of time.

9. A method according to any one of claims 1 to 7, wherein the phase offset angle (theta) between the stator and rotor magnetic fields of the motor is changed (307) in two or more successive steps.

10. A method according to claim 9, wherein the size of each step is proportional to a difference between the temporary reference speed (TemporarySpeedRef) and the application reference speed (ApplicationSpeedRef).

11. A method according to claim 9 or claim 10, wherein the steps to change (307) the phase offset angle (theta) are made at predetermined intervals in time.

12. A method according to claim 9 or claim 10, wherein the steps to change (307) the phase offset angle (theta) are made at intervals in time proportional to the difference between the temporary reference speed (TemporarySpeedRef) and the application reference speed (ApplicationSpeedRef).

13. A method according to any one of the preceding claims, wherein the permanent magnet motor (101) is one of a brushless direct-current (BLDC) motor and a permanent magnet synchronous motor (PMSM).

14. A closed-loop control system (100) for controlling the speed of a permanent magnet motor (101), the system comprising:

    means for applying (301) closed-loop control to the speed of the motor to match a reference speed ($\omega_{ref}$) by comparing a measured q-axis stator current (Iqm) of the motor to a reference q-axis stator current (Iqr) of the motor and deriving a difference (Iq_difference) therebetween;
    means for checking (302) whether the difference (Iq_difference) between the measured and reference q-axis stator currents of the motor is greater than a threshold value (IqErrorThreshold) at which a phase current amplitude of the motor starts to vary according to the number of poles of the motor;
    **characterized by**:

    means for setting (303) the reference speed ($\omega_{ref}$) of the motor equal to an application reference speed (ApplicationSpeedRef) and returning to closed-loop control of the speed of the motor if the means for checking (302) determines that the difference (Iq_difference) between the measured and reference q-axis stator currents of the motor is not greater than the threshold value (IqErrorThreshold);

means for setting (304) the reference speed ($\omega_{ref}$) of the motor equal to a temporary reference speed (TemporarySpeedRef) and checking (305) whether the temporary reference speed (TemporarySpeedRef) is less than the application reference speed (ApplicationSpeedRef) if the means for checking (302) determines that the difference (Iq_difference) between the measured and reference q-axis stator currents of the motor is greater than the threshold value (IqErrorThreshold);

means for setting (306) the reference speed ($\omega_{ref}$) equal to the application reference speed (ApplicationSpeedRef) and returning to closed-loop control of the speed of the motor if the means for checking (305) determines that the temporary reference speed (TemporarySpeedRef) is not less than the application reference speed (ApplicationSpeedRef); and

means for changing (307) a phase offset angle (theta) between stator and rotor magnetic fields of the motor before returning to closed-loop control of the speed of the motor if the means for checking (305) determines that the temporary reference speed (TemporarySpeedRef) is less than the application reference speed (ApplicationSpeedRef).

15. A computer program product or a program code or system comprising instructions to cause the device of claim 14 to execute one or more than one of the methods according to any one of claims 1 to 13.

**Patentansprüche**

1. Ein Verfahren zum Steuern eines Permanentmagnetmotors (101), wobei das Verfahren zumindest umfasst:

   Anwenden (301) einer Closed-Loop-Regelung auf die Geschwindigkeit des Motors zur Anpassung an eine Referenzgeschwindigkeit ($\omega$ref) durch Vergleichen eines gemessenen q-Achsen-Statorstroms (Iqm) des Motors mit einem Referenz-q-Achsen-Statorstrom (Iqr) des Motors und Ableiten einer Differenz (Iq_difference) zwischen diesen;
   Prüfen (302), ob die Differenz (Iq_Differenz) zwischen dem gemessenen und dem Referenz-q-Achsen-Statorstrom des Motors größer als ein Schwellenwert (IqErrorThreshold) ist, bei dem eine Phasenstromamplitude des Motors beginnt, sich je nach der Anzahl der Pole des Motors zu verändern;
   **gekennzeichnet durch**:

   wenn nicht, Setzen (303) der Solldrehzahl ($\omega$ref) des Motors gleich einer Anwendungssolldrehzahl (ApplicationSpeedRef) und Rückkehr zur Regelung der Drehzahl des Motors;
   wenn ja, Setzen (304) der Solldrehzahl ($\omega$ref) des Motors gleich einer temporären Solldrehzahl (TemporarySpeedRef) und Prüfen (305), ob die temporäre Solldrehzahl (TemporarySpeedRef) kleiner als die Anwendungssolldrehzahl (ApplicationSpeedRef) ist;
   wenn nicht, Einstellung (306) der Solldrehzahl ($\omega$ref) gleich der Anwendungssolldrehzahl (ApplicationSpeedRef) und Rückkehr zur Regelung der Drehzahl des Motors;
   wenn ja, Ändern (307) eines Phasenverschiebungswinkels (theta) zwischen den Magnetfeldern von Stator und Rotor des Motors vor der Rückkehr zur Regelung der Motordrehzahl.

2. Verfahren nach Anspruch 1, ferner umfassend:
   Einstellen der temporären Bezugsdrehzahl (TemporarySpeedRef), um sich der Anwendungs-Bezugsdrehzahl (ApplicationSpeedRef) anzunähern.

3. Verfahren nach Anspruch 2, ferner umfassend: Einstellen der temporären Bezugsgeschwindigkeit (TemporarySpeedRef) zur Annäherung an die Anwendungs-Bezugsgeschwindigkeit (ApplicationSpeedRef):

   anfängliches Einstellen eines Wertes der temporären Bezugsdrehzahl (TemporarySpeedRef), der gleich einer gemessenen oder geschätzten Ist-Drehzahl des Motors ist; und
   Einstellen des Wertes der temporären Bezugsdrehzahl (TemporarySpeedRef) um einen Betrag (deltaRefSpeed), der proportional zu einer Differenz zwischen dem Schwellenwert (IqErrorThreshold) und der Differenz (Iq_difference) zwischen den gemessenen und den Bezugs-q-Achsen-Statorströmen des Motors ist.

4. Verfahren nach Anspruch 3, wobei die gemessene oder geschätzte Ist-Drehzahl des Motors die Drehzahl des Motors ist, die aus der Verwendung der SMOPOS-Schätzung (107) der Position des Motors unter Verwendung der SMOPOS-Schätzung (107) der Rotorposition des Gleitmodusbeobachters abgeleitet (109) wird.

**5.** Verfahren nach einem der vorhergehenden Ansprüche, bei dem der gemessene q-Achsen-Statorstrom (Iqm) des Motors mit dem Referenz-q-Achsen-Statorstrom (Iqr) des Motors im Frequenzbereich verglichen wird.

**6.** Verfahren nach einem der vorhergehenden Ansprüche, das weiterhin das Filtern mindestens eines der gemessenen q-Achsen-Statorströme (Iqm) des Motors und des Referenz-q-Achsen-Statorstroms (Iqr) des Motors umfasst, um jeweils einen gefilterten gemessenen q-Achsen-Statorstrom (Iqmf) des Motors und einen gefilterten Referenz-q-Achsen-Statorstrom (Iqrf) des Motors abzuleiten.

**7.** Verfahren nach Anspruch 6 in Abhängigkeit von Anspruch 5, wobei der gefilterte gemessene q-Achsen-Statorstrom (Iqmf) des Motors und/oder der gefilterte q-Achsen-Referenzstatorstrom (Iqrf) des Motors unter Verwendung eines Bandpassfilters oder eines Hochpassfilters im Frequenzbereich abgeleitet wird.

**8.** Verfahren nach einem der vorhergehenden Ansprüche, bei dem der Phasenverschiebungswinkel (theta) zwischen dem Stator- und dem Rotormagnetfeld des Motors kontinuierlich über eine vorbestimmte Zeitdauer geändert (307) wird.

**9.** Verfahren nach einem der Ansprüche 1 bis 7, bei dem der Phasenverschiebungswinkel (theta) zwischen dem Stator- und dem Rotormagnetfeld des Motors in zwei oder mehr aufeinanderfolgenden Schritten geändert (307) wird.

**10.** Verfahren nach Anspruch 9, wobei die Größe jedes Schrittes proportional zu einer Differenz zwischen der temporären Bezugsdrehzahl (TemporarySpeedRef) und der Anwendungs-Bezugsdrehzahl (ApplicationSpeedRef) ist.

**11.** Verfahren nach Anspruch 9 oder Anspruch 10, wobei die Schritte zur Änderung (307) des Phasenverschiebungswinkels (Theta) in vorbestimmten Zeitintervallen durchgeführt werden.

**12.** Verfahren nach Anspruch 9 oder 10, bei dem die Schritte zur Änderung (307) des Phasenverschiebungswinkels (Theta) in Zeitintervallen durchgeführt werden, die proportional zur Differenz zwischen der temporären Referenzgeschwindigkeit (TemporarySpeedRef) und der Anwendungsreferenzgeschwindigkeit (ApplicationSpeedRef) sind.

**13.** Verfahren nach einem der vorstehenden Ansprüche, wobei der Permanentmagnetmotor (101) ein bürstenloser Gleichstrommotor (BLDC) oder ein Permanentmagnet-Synchronmotor (PMSM) ist.

**14.** Ein geschlossenes Regelkreis-System (100) zum Regeln der Geschwindigkeit eines Permanentmagnetmotors (101), wobei das System umfasst:

Mittel zum Anwenden (301) eines geschlossenen Regelkreises auf die Geschwindigkeit des Motors zur Anpassung an eine Bezugsgeschwindigkeit (ωref) durch Vergleichen eines gemessenen q-Achsen-Statorstroms (Iqm) des Motors mit einem Bezugs-q-Achsen-Statorstrom (Iqr) des Motors und Ableiten einer Differenz (Iq_Differenz) dazwischen;

Mittel zum Prüfen (302), ob die Differenz (Iq_Differenz) zwischen dem gemessenen und dem Referenz-q-Achsen-Statorstrom des Motors größer als ein Schwellenwert (IqErrorThreshold) ist, bei dem eine Phasenstromamplitude des Motors beginnt, sich entsprechend der Anzahl der Pole des Motors zu verändern; **gekennzeichnet durch**:

eine Einrichtung (303) zum Einstellen (303) der Bezugsgeschwindigkeit (ωref) des Motors gleich einer Anwendungs-Bezugsgeschwindigkeit (ApplicationSpeedRef) und zur Rückkehr zu einer Regelung der Geschwindigkeit des Motors, wenn die Prüfeinrichtung (302) feststellt, dass die Differenz (Iq_difference) zwischen den gemessenen und den Bezugs-q-Achsen-Statorströmen des Motors nicht größer als der Schwellenwert (IqErrorThreshold) ist;

eine Einrichtung zum Einstellen (304) der Bezugsdrehzahl (ωref) des Motors gleich einer zeitweiligen Bezugsdrehzahl (TemporarySpeedRef) und zum Prüfen (305), ob die zeitweilige Bezugsdrehzahl (TemporarySpeedRef) kleiner als die Anwendungs-Bezugsdrehzahl (ApplicationSpeedRef) ist, wenn die Einrichtung zum Prüfen (302) bestimmt, dass die Differenz (Iq_difference) zwischen den gemessenen und den Bezugs-q-Achsen-Statorströmen des Motors größer als der Schwellenwert (IqErrorThreshold) ist;

Mittel zum Einstellen (306) der Solldrehzahl (ωref) gleich der Anwendungssolldrehzahl (ApplicationSpeedRef) und zur Rückkehr zur Regelung der Drehzahl des Motors, wenn das Mittel zur Überprüfung (305) bestimmt, dass die temporäre Solldrehzahl (TemporarySpeedRef) nicht kleiner als die Anwendungssolldrehzahl (ApplicationSpeedRef) ist; und

Mittel zum Ändern (307) eines Phasenverschiebungswinkels (theta) zwischen Stator- und Rotormagnetfeldern des Motors vor der Rückkehr zur Regelung der Motordrehzahl, wenn das Prüfmittel (305) feststellt, dass die temporäre Solldrehzahl (TemporarySpeedRef) kleiner als die Anwendungssolldrehzahl (ApplicationSpeedRef) ist.

15. Ein Computerprogrammprodukt oder ein Programmcode oder System mit Befehlen, die bewirken, dass das Gerät eine oder mehrere der Verfahren nach einem der Ansprüche 1 bis 13 ausführt.

**Revendications**

1. Une méthode de commande d'un moteur à aimant permanent (101), la méthode comprenant au moins :

    l'application (301) d'une commande en boucle fermée à la vitesse du moteur pour qu'elle corresponde à une vitesse de référence (ωref) en comparant un courant statorique d'axe q mesuré (Iqm) du moteur à un courant statorique d'axe q de référence (Iqr) du moteur et en dérivant une différence (Iq_difference) entre eux ;
    vérifier (302) si la différence (Iq_difference) entre les courants statoriques de l'axe q mesurés et de référence du moteur est supérieure à une valeur seuil (IqErrorThreshold) à laquelle une amplitude de courant de phase du moteur commence à varier en fonction du nombre de pôles du moteur ;
    **caractérisé par** :

        sinon, le réglage (303) de la vitesse de référence (ωref) du moteur à une vitesse de référence d'application (ApplicationSpeedRef) et le retour à un contrôle en boucle fermée de la vitesse du moteur ;
        si oui, en réglant (304) la vitesse de référence (ωref) du moteur à une vitesse de référence temporaire (TemporarySpeedRef) et en vérifiant (305) si la vitesse de référence temporaire (TemporarySpeedRef) est inférieure à la vitesse de référence d'application (ApplicationSpeedRef) ;
        sinon, régler (306) la vitesse de référence (ωref) égale à la vitesse de référence d'application (ApplicationSpeedRef) et revenir à un contrôle en boucle fermée de la vitesse du moteur ;
        si oui, modifier (307) un angle de déphasage (thêta) entre les champs magnétiques du stator et du rotor du moteur avant de revenir à un contrôle en boucle fermée de la vitesse du moteur.

2. Une méthode selon la revendication 1, comprenant en outre :
l'ajustement de la vitesse de référence temporaire (TemporarySpeedRef) pour se rapprocher de la vitesse de référence de l'application (ApplicationSpeedRef).

3. Une méthode selon la revendication 2, comprenant en outre : l'ajustement de la vitesse de référence temporaire (TemporarySpeedRef) pour se rapprocher de la vitesse de référence de l'application (ApplicationSpeedRef). 3 :

    la fixation initiale d'une valeur de la vitesse de référence temporaire (TemporarySpeedRef) égale à une vitesse réelle mesurée ou estimée du moteur ; et
    ajuster la valeur de la vitesse de référence temporaire (TemporarySpeedRef) d'une quantité (deltaRefSpeed) proportionnelle à une différence entre ladite valeur seuil (IqErrorThreshold) et ladite différence (Iq_difference) entre les courants statoriques mesurés et de référence de l'axe q du moteur.

4. Une méthode selon la revendication 3, dans lequel la vitesse réelle mesurée ou estimée du moteur est la vitesse du moteur dérivée (109) de l'utilisation de l'estimation (107) de la position du rotor de l'observateur en mode glissant (SMOPOS) de la position du moteur.

5. Une méthode selon l'une quelconque des revendications précédentes, dans laquelle le courant statorique de l'axe q mesuré (Iqm) du moteur est comparé au courant statorique de l'axe q de référence (Iqr) du moteur dans le domaine des fréquences.

6. Une méthode selon l'une quelconque des revendications précédentes, comprenant en outre le filtrage d'au moins l'un du courant statorique d'axe q mesuré (Iqm) du moteur et du courant statorique d'axe q de référence (Iqr) du moteur pour obtenir respectivement un courant statorique d'axe q mesuré filtré (Iqmf) du moteur et un courant statorique d'axe q de référence filtré (Iqrf) du moteur.

7. Une méthode selon la revendication 6 comme dépendant de la revendication 5, dans lequel le au moins un du courant statorique d'axe q mesuré et filtré (Iqmf) du moteur et du courant statorique d'axe q de référence filtré (Iqrf) du moteur est dérivé en utilisant un filtre passe-bande ou un filtre passe-haut dans le domaine des fréquences.

8. Une méthode selon l'une des revendications précédentes, dans laquelle l'angle de déphasage (thêta) entre les champs magnétiques du stator et du rotor du moteur est modifié (307) de manière continue sur une période de temps prédéterminée.

9. Une méthode selon l'une quelconque des revendications 1 à 7, dans lequel l'angle de décalage de phase (thêta) entre les champs magnétiques du stator et du rotor du moteur est modifié (307) en deux ou plusieurs étapes successives.

10. Une méthode selon la revendication 9, dans laquelle la taille de chaque étape est proportionnelle à une différence entre la vitesse de référence temporaire (TemporarySpeedRef) et la vitesse de référence de l'application (ApplicationSpeedRef).

11. Une méthode selon la revendication 9 ou la revendication 10, dans lequel les étapes de modification (307) de l'angle de déphasage (thêta) sont effectuées à des intervalles de temps prédéterminés.

12. Une méthode selon la revendication 9 ou la revendication 10, dans lequel les étapes de modification (307) de l'angle de déphasage (thêta) sont effectuées à des intervalles de temps proportionnels à la différence entre la vitesse de référence temporaire (TemporarySpeedRef) et la vitesse de référence d'application (ApplicationSpeedRef).

13. Une méthode selon l'une des revendications précédentes, dans laquelle le moteur à aimant permanent (101) est l'un d'un moteur à courant continu sans balais (BLDC) et d'un moteur synchrone à aimant permanent (PMSM).

14. Un système de commande en boucle fermée (100) pour contrôler la vitesse d'un moteur à aimant permanent (101), le système comprenant :

des moyens pour appliquer (301) une commande en boucle fermée à la vitesse du moteur pour qu'elle corresponde à une vitesse de référence (ωref) en comparant un courant statorique d'axe q mesuré (Iqm) du moteur à un courant statorique d'axe q de référence (Iqr) du moteur et en dérivant une différence (Iq_difference) entre eux ;
des moyens pour vérifier (302) si la différence (Iq_difference) entre les courants statoriques de l'axe q mesurés et de référence du moteur est supérieure à une valeur seuil (IqErrorThreshold) à laquelle une amplitude de courant de phase du moteur commence à varier en fonction du nombre de pôles du moteur ;
**caractérisé par** :

un moyen de réglage (303) de la vitesse de référence (ωref) du moteur égal à une vitesse de référence d'application (ApplicationSpeedRef) et de retour à un contrôle en boucle fermée de la vitesse du moteur si le moyen de contrôle (302) détermine que la différence (Iq_difference) entre les courants statoriques d'axe q mesurés et de référence du moteur n'est pas supérieure à la valeur seuil (IqErrorThreshold) ;
des moyens pour régler (304) la vitesse de référence (ωref) du moteur égale à une vitesse de référence temporaire (TemporarySpeedRef) et pour vérifier (305) si la vitesse de référence temporaire (TemporarySpeedRef) est inférieure à la vitesse de référence d'application (ApplicationSpeedRef) si les moyens de vérification (302) déterminent que la différence (Iq_difference) entre les courants statoriques de l'axe q mesurés et de référence du moteur est supérieure à la valeur seuil (IqErrorThreshold) ;
des moyens pour régler (306) la vitesse de référence (ωref) égale à la vitesse de référence d'application (ApplicationSpeedRef) et revenir à un contrôle en boucle fermée de la vitesse du moteur si les moyens de contrôle (305) déterminent que la vitesse de référence temporaire (TemporarySpeedRef) n'est pas inférieure à la vitesse de référence d'application (ApplicationSpeedRef) ; et
des moyens pour modifier (307) un angle de déphasage (thêta) entre les champs magnétiques du stator et du rotor du moteur avant de revenir à un contrôle en boucle fermée de la vitesse du moteur si les moyens de contrôle (305) déterminent que la vitesse de référence temporaire (TemporarySpeedRef) est inférieure à la vitesse de référence d'application (ApplicationSpeedRef).

15. Un produit de programme informatique ou un code de programme ou un système comprenant des instructions pour que le dispositif exécute une ou plusieurs des méthodes selon l'une des revendications 1 à 13.

Fig. 1

EP 3 331 153 B1

FIG. 2A

EP 3 331 153 B1

FIG. 2B

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140055065 A
- US 20120293101 A
- US 2009224707 A